# FASCICULE DE BREVET EUROPEEN

(11) **EP 0 994 016 B1**
(45) Date de publication et mention de la délivrance du brevet: **15.12.2004**
(21) Numéro de dépôt: 99410137.6
(22) Date de dépôt: 15.10.1999
(51) Int. Cl.: B62M 27/02

(54) **Dispositif de freinage pour véhicule motorisé de neige**
Bremsvorrichtung für Schneefahrzeug
Braking device for a motorised snow vehicle

(30) Priorité: 16.10.1998 FR 9813166
(43) Date de publication de la demande: 19.04.2000
(73) Titulaire: Bibollet, Jean-Claude, F-74230 Thônes (FR)
(72) Inventeur: Bibollet, Jean-Claude, F-74230 Thônes (FR)
(74) Mandataire: Hecké, Gérard

(56) Documents cités:
- FR-A- 2 714 347
- US-A- 5 673 772

## Description

### Domaine technique de l'invention

La présente invention concerne un véhicule motorisé sur neige, comprenant :
- un ensemble avant de direction comportant au moins une colonne de direction solidaire d'au moins un ski, et articulée en rotation autour d'un axe,
- et un ensemble arrière porteur, équipé au moins d'une chenille de propulsion.

### Etat de la technique

A l'heure actuelle, les dispositifs de freinage de ce type de véhicule agissent sur la chenille d'entraînement ; s'ils peuvent ralentir et même arrêter la rotation de cette chenille, ils se révèlent souvent insuffisants pour freiner efficacement le véhicule dans les descentes où la chenille du fait de sa position arrière, se retrouve délestée, par le transfert de poids dû à la pente, le poids étant transféré principalement sur l'avant du véhicule, et notamment sur le ou les skis de direction du véhicules.

Le document FR-A-2714347 décrit un dispositif de freinage destiné à équiper un véhicule motorisé sur neige, et comprenant des structures articulés fixées de part et d'autre de la chenille, sur la face inférieure des marchepieds, et à l'aplomb du siège du véhicule.

Le document US-A-5673772 se rapports à un dispositif de freinage pour un véhicule sur neige, comprenant une raclette montée pivotante autour d'un axe horizontal à l'amère des skis, et pouvant être actionnée par des moyens de commande.

### Objet de l'invention

Le dispositif selon l'invention a donc pour but d'installer un frein efficace sur un véhicule motorisé de neige. Selon l'invention, l'ensemble avant de direction comprend au moins un élément de freinage mobile, piloté par des moyens de commande entre une position de repos en partie au moins escamotée à l'intérieur d'une cavité du ski, et une position active de freinage durant laquelle ledit élément fait saillie sous la surface de glissement du ski dans une zone médiane se situant sensiblement au niveau de l'axe d'articulation entre la colonne de direction et le ski.

Selon une caractéristique de l'invention, l'élément de freinage est mobile en coulissement soit par rapport au ski, soit par rapport à la colonne de direction, ledit coulissement s'effectuant obliquement par rapport au ski selon un axe s'étendant de l'avant et du haut vers l'arrière et le bas du ski, ou selon un axe s'étendant de l'arrière et du haut vers l'avant et vers le bas du ski.

Selon une autre caractéristique de l'invention, l'élément de freinage est mobile en rotation par rapport à un axe transversal s'étendant perpendiculairement par rapport au plan longitudinal de symétrie du ski, le déplacement en rotation de l'élément de freinage de la position active vers la position de repos s'effectuant vers le haut dans le sens trigonométrique. L'élément de freinage comporte un patin de freinage, constitué d'au moins une lame d'agrippage destinée à assurer un effet de freinage progressif en fonction de l'enfoncement dans la neige.

Le patin de freinage en position escamotée de repos peut se trouver soit à l'extérieur du corps du ski, soit dans une cavité de repos située à l'intérieur du corps du ski, ou soit dans une fenêtre traversant le ski sur toute son épaisseur.

Selon un mode de réalisation préférentiel, le patin de freinage en forme de mâchoire comporte deux lames crantées latérales sensiblement parallèles au plan longitudinal de symétrie, et une lame crantée transversale reliant les lames latérales à leur extrémité arrière.

Les moyens de commande comportent à titre d'exemple un actionneur électrique piloté par un contacteur, et coopérant avec deux contacts de fin de course permettant de couper l'alimentation de l'actionneur dans lesdites positions extrêmes active et de repos. Les moyens de commande peuvent également comporter un vérin hydraulique ou pneumatique.

Ces différents moyens de commande peuvent être intégrés dans un logement du ski ou dans la colonne de direction.

Selon une disposition particulière, l'axe de rotation de l'élément de freinage est coaxial avec l'axe d'articulation de la colonne de direction. Les moyens de commande comportent un dispositif à moteur d'entraînement coopérant avec des moyens de transmission couplés avec l'élément de freinage. Les moyens de transmission peuvent être constitués par un couple d'engrenages coniques, ou une roue dentée complète, ou par un secteur circulaire de roue dentée actionnée par une vis sans fin s'étendant perpendiculairement par rapport à l'axe de rotation de l'élément de freinage.

Selon un développement de l'invention, le bord inférieur de chaque élément de freinage comporte une première partie antérieure avec une arête sans dents jouant le rôle de couteau, et une deuxième partie postérieure crantée dont les dents sont en retrait dans le sens vertical par rapport à l'arête, de manière à se trouver au-dessus de la neige dans la position de non-freinage.

### Description sommaire des dessins

D'autres avantages et caractéristiques ressortiront plus clairement de la description qui va suivre d'un mode de réalisation de l'invention, donné à titre d'exemple non limitatif et représenté aux dessins annexés dans lesquels :
- les figures 1 et 2 représentent deux types de véhicules de neige comportant respectivement un ou deux skis sur lesquels il est possible d'installer le dispositif de freinage.
- Les figures 3, 4 et 5 concernent trois variantes possibles d'un premier mode de réalisation du dispositif avec un patin de freinage mobile en translation.
- Les figures 6, 7 et 8 représentent trois variantes d'un deuxième mode de réalisation selon lequel le patin de freinage est mobile en pivotement.
- Les figures 9, 10, et 11 représentent un mode de réalisation préférentiel de l'invention, le dispositif de freinage complet étant respectivement en position de repos, en position active et en position intermédiaire.
- La figure 12 représente une vue en coupe longitudinale de l'actionneur électrique de la figure 9.
- La figure 13 montre une variante d'exécution où l'actionneur est intégré dans un logement du ski et où la neige arrachée par le patin de freinage, est évacuée par une fenêtre traversant le ski de part en part dans son épaisseur.
- La figure 14 représente une vue en coupe selon la ligne AA de la figure 13.
- La figure 15 montre une variante de réalisation avec les moyens de commande de l'élément de freinage intégrés dans la colonne de direction.
- La figure 16 montre une vue identique de la figure 15 d'une autre variante de réalisation avec l'élément de freinage jouant également le rôle de couteau.
- La figure 17 est une vue en plan de la figure 16.
- La figure 18 est une vue en coupe agrandie selon la ligne BB de la figure 17.
- La figure 19 est une vue en coupe agrandie selon la ligne CC de la figure 17.
- La figure 20 est une vue en coupe agrandie selon la ligne DD de la figure 16.
- La figure 21 représente une vue en perspective à échelle agrandie d'un élément de freinage de la figure 16.

### Description détaillée de différents modes de réalisation

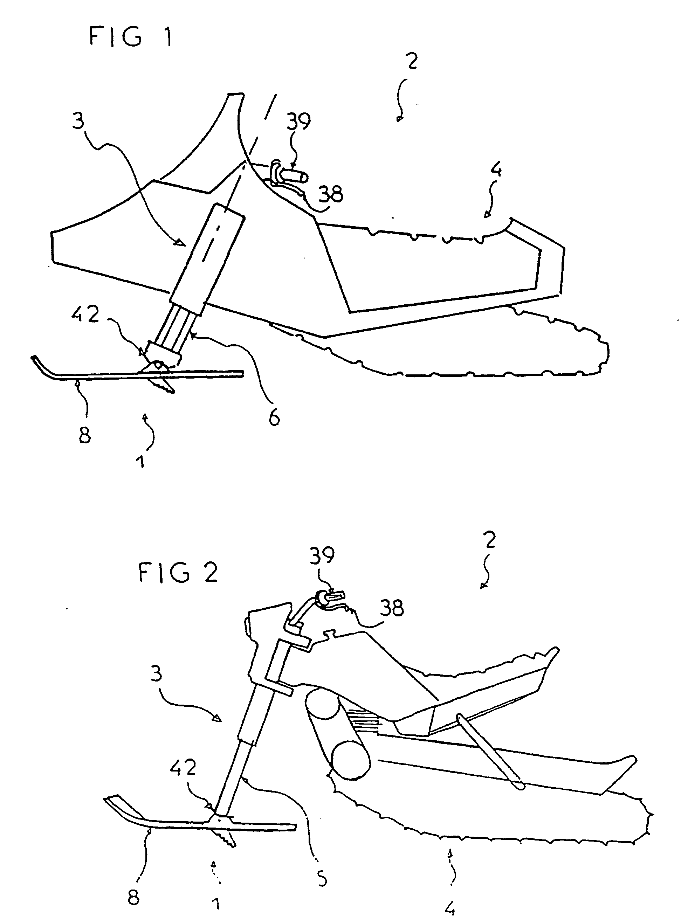

Sur les figures 1 à 8, le dispositif de freinage 1 est destiné à être installé sur des véhicules de neige 2 du type constitué d'un ensemble arrière porteur 4 sur lequel est articulé un ensemble avant de direction 3. L'ensemble avant de direction 3 comporte à son extrémité supérieure un guidon 39 et à son extrémité inférieure un ski 8 articulé en rotation autour d'un axe transversal 42 sur la colonne de direction 5 tel qu'illustré sur la figure 2, où deux skis 8 articulés sur deux bras de direction 6 d'une fourche tel qu'illustré sur la figure 1.
Le dispositif de freinage 1 destiné à être installé sur le ou les ski(s) 8 articulé(s) sur une colonne de direction 5 d'un ensemble avant de direction 3 d'un véhicule de neige 2, est constitué d'un dispositif de mise en action 7 permettant la sollicitation de moyens de commande 9 destinés à actionner un élément mobile de freinage 10, ledit élément mobile 10 se déplaçant entre une position de repos dans laquelle il se trouve escamoté par rapport à la surface de glissement 11 du ski 8, et une position active où il fait en partie saillie hors de ladite surface de glissement 11. Ladite position active en saillie étant avantageusement obtenue dans une zone médiane 41 du ski 8 située sensiblement au niveau de l'articulation 42, entre la colonne de direction 5 et le ski 8.

On entend également par colonne de direction 5 les bras de direction 6 d'un véhicule du type illustré figure 1 possédant deux skis.

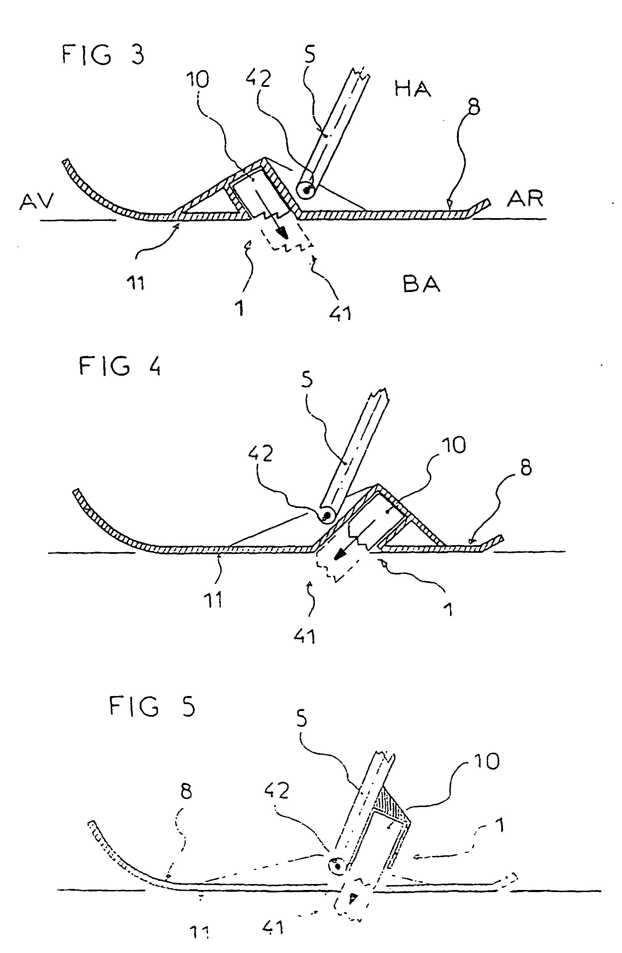

Selon un premier mode de réalisation, l'élément mobile de freinage 10 est mobile en translation par rapport au ski 8, ou par rapport à la colonne de direction 5 tel qu'illustré aux figures 3, 4 et 5 ; il peut faire saillie vers l'arrière et le bas du ski 8, comme dans la première variante illustrée à la figure 3, ou vers l'avant et le bas, comme dans le deuxième variante illustrée à la figure 4.

Selon une troisième variante illustrée à la figure 5, l'élément mobile de freinage 10 est mobile en translation par rapport à la colonne de direction 5 sur laquelle le ski 8 est articulé en rotation, ce qui offre l'avantage d'accentuer ou au contraire de minimiser l'effet de freinage automatiquement en fonction de l'angle d'inclinaison du ski par rapport à la colonne de direction. Lorsque le véhicule franchit une bosse, l'effet de freinage est accentué avec l'inclinaison du ski vers le bas. A l'inverse, l'effet de freinage est diminué lorsque l'avant du ski se relève, par exemple lors d'un franchissement d'un creux, et ce sans avoir à agir sur l'organe de commande du frein.

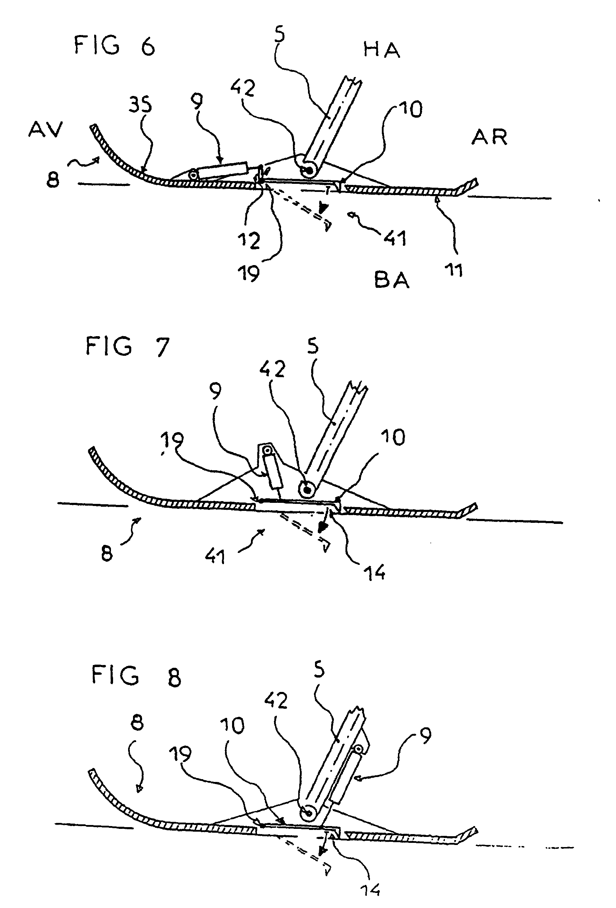

Selon un deuxième mode de réalisation, l'élément mobile de freinage 10 est articulé en rotation autour d'un axe de rotation 19 sensiblement transversal par rapport au ski 8 tel qu'illustré aux figures 6, 7 et 8. Dans une première variante, les moyens de commande 9 permettant d'obtenir la rotation de l'élément mobile de freinage 10, sont positionnés sur la partie avant (AV) du ski 8 et agissent sur un bras de levier 12 de l'élément mobile de freinage 10, comme le montre la figure 6. Selon une deuxième variante, les moyens de commande 9 solidaires du ski 8, agissent directement sur l'élément mobile de frein 10, tel qu'illustré figure 7. Selon une troisième variante illustrée à la figure 8, les moyens de commande 9 sont solidaires de la colonne de direction 5, ce qui offre le même avantage d'accentuer ou au contraire de minimiser automatiquement f'effet de freinage en fonction de l'angle d'inclinaison du ski par rapport à la colonne de direction 5.

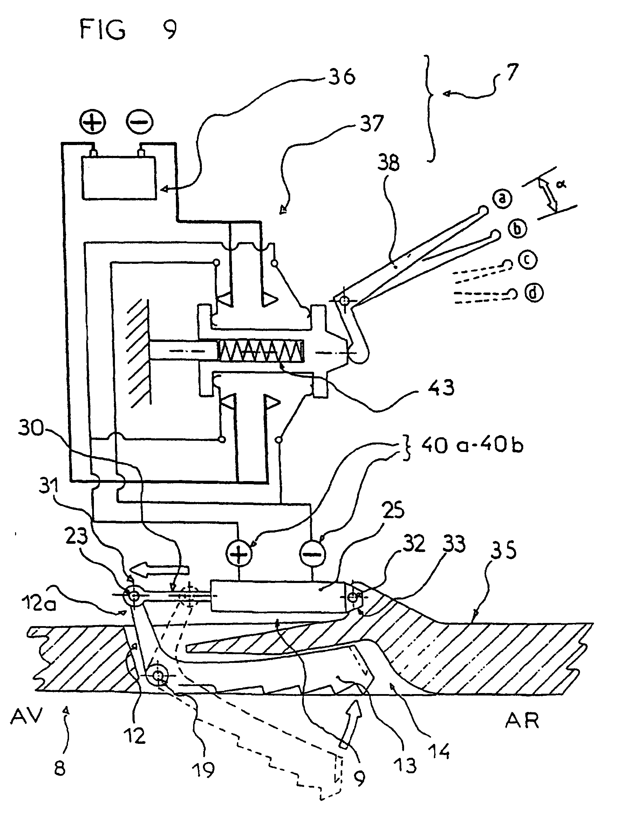

En référence aux figures 9 à 11, l'élément mobile de freinage 10 constitué d'un bras de levier 12 et d'un patin de freinage 13, est articulé en rotation sur un axe transversal 19 du ski 8, et les moyens de commande 9 sont situés à l'arrière (AR) de l'axe transversal 19. Les moyens de commande peuvent provoquer la rotation de l'extrémité supérieure 12a du bras de levier 12 de l'élément mobile de freinage 10 provoquant ainsi la rotation du patin de freinage 13 de l'élément mobile de freinage 10.

L'élément mobile de freinage 10 est ainsi mobile entre une position de repos dans laquelle il est escamoté à l'intérieur d'une cavité de repos 14 du ski 8 adaptée à la forme du patin de freinage 13 situé à l'intérieur et au-dessus de la surface de glissement 11, et une position active de freinage où une partie du patin de freinage 13 fait saillie hors de la surface de glissement 11, de manière à pénétrer plus ou moins profondément dans la neige pour exercer une action de freinage.

Dans ce mode de réalisation préférée de l'invention, le patin de freinage 16 a la forme d'un étrier composé de deux lames latérales 16a, 16b sensiblement parallèles au plan longitudinal de symétrie du ski, et une lame transversale 15 située à l'extrémité arrière 17 du patin 13, lesdites lames latérales 16a, 16b et transversales 15 possédant des rebords inférieurs crantés 15a, 18a, 18b. Les lames latérales sont légèrement recourbées vers le haut HA et le rebord inférieur 15a de la lame transversale 15 légèrement en retrait vers le haut par rapport aux rebords inférieurs crantés 18a, 18b desdites lames latérales 16a, 16b de manière à ce que lors d'un freinage, les lames latérales 16a, 16b fassent saillie hors de la surface de glissement 11 avant que la lame transversale 15 ne fasse également saillie. Ainsi, lors d'un freinage bref, seules les lames latérales 16a, 16b font saillie et lors d'un freinage un peu plus long, la lame transversale 15 vient également faire saillie, de manière à augmenter la force de freinage du dispositif 1. Selon une variante d'exécution, ladite lame transversale 15 lorsqu'elle fait en partie saillie, est contenue dans un plan s'étendant du bas et de l'avant vers le haut et l'arrière, l'angle aigu qu'elle forme avec la verticale étant maximum lorsque l'élément de freinage 10 est en position active de freinage.

A son extrémité avant, ledit patin de freinage 13 est muni d'un axe transversal de rotation 19 pouvant pivoter à l'intérieur d'un trou 20 réalisé dans le corps du ski 8.

Les lames latérales 16a, 16b du patin 13 sont prolongées par deux parois latérales 21a, 21b, s'étendant sensiblement vers le haut (HA), et portant à leurs extrémités supérieures un axe transversal de commande 23. Les parois latérales 21a, 21b et l'axe de commande 23 constituent le bras de levier 12 de l'élément mobile de freinage 10.

Il est possible, sans pour autant sortir du cadre de l'invention, de réaliser un élément mobile de freinage 10 dont le levier serait une biellette solidaire de l'axe transversal de rotation 19 ou d'utiliser un axe solidaire du corps du ski et un patin 13 pivotant autour de l'axe ; de même ledit patin 13 peut ne pas posséder une lame transversale 15 à son extrémité arrière, et pivoter de manière à ce que les lames latérales 16a, 16b se rangent le long des parois latérales 24a, 24b du corps du ski 8 lorsque l'élément mobile de freinage 10 est en position de repos. Le patin 13 peut aussi être constitué d'une seule lame latérale crantée, par exemple, ou toute autre forme de profil du type une lame latérale et de deux lames obliques formant un profil en Y, en T, en U, ou deux lames en V.

Les moyens de commande 9 de l'élément de freinage 10 sont constitués à titre d'exemple par un actionneur électrique 25 comprenant un stator 26, et un rotor 27 provoquant la rotation d'une tige filetée 28 entraînant la translation du piston 30 de l'actionneur 25. Le piston 30 est accouplé à l'axe de commande 23 du bras de levier 12 de l'élément mobile de freinage 10. L'actionneur 25 est monté longitudinalement par son extrémité arrière 33 sur un axe de positionnement 32 solidaire du ski 8, lui permettant un léger débattement angulaire dans le plan longitudinal de symétrie.

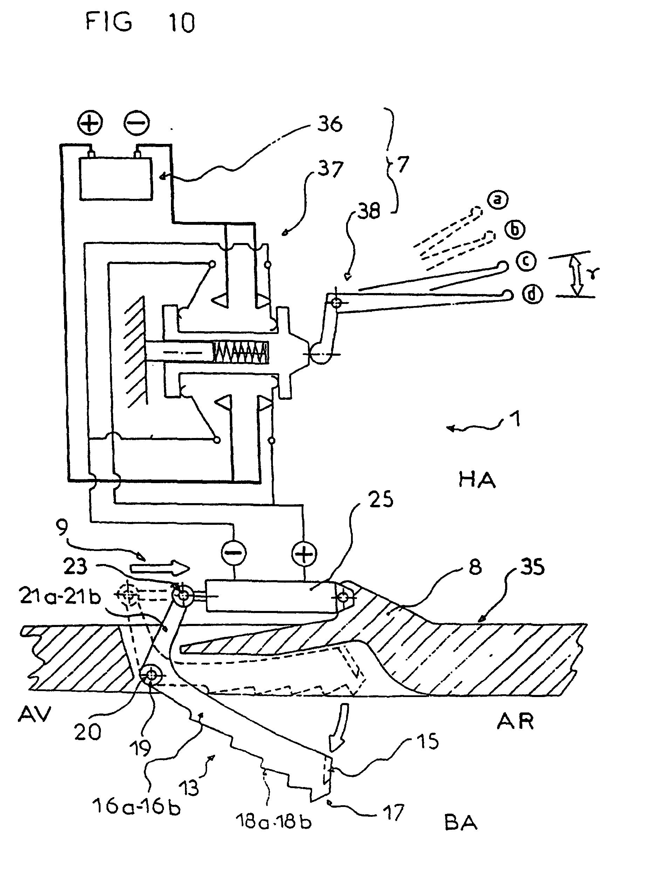

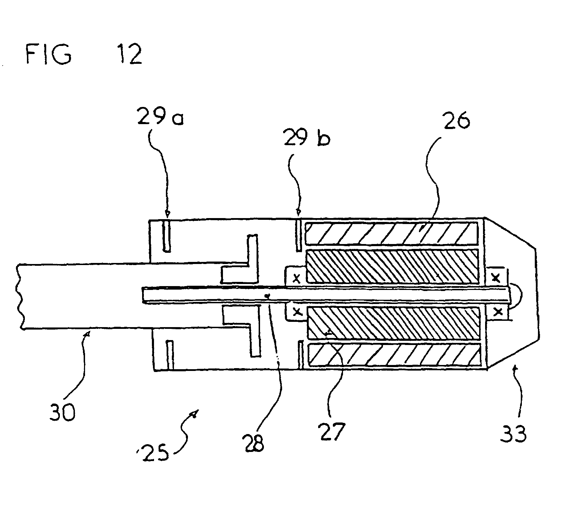

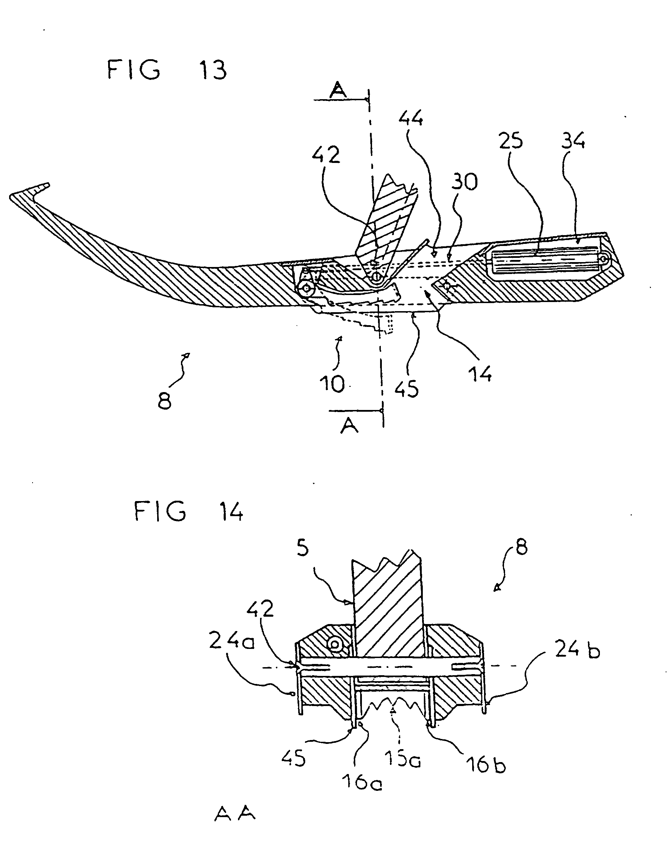

L'actionneur 25 peut être positionné soit dans un logement 34 du ski 8 prévu à cet effet, tel qu'illustré aux figures 13, soit sur la face supérieure 35 du ski, tel qu'illustré figures 9, 10 et 11. En outre l'actionneur 25 possède deux contacts de fin de course 29a, 29b figure 12, permettant de couper automatiquement l'alimentation électrique de l'actionneur 25 lorsque son piston 30 est respectivement en position de repos ou en position extrême active. Une nouvelle sollicitation de l'actionneur 25 est rendue possible par l'inversion de la polarité de son alimentation. La position extrême active correspond à la position rentrée maximum du piston 30 dans l'actionneur 25 et donc à la position extrême active de l'élément mobile de freinage 10 tel qu'illustré figure 10, et la position de repos correspond à la position de sortie maximum du piston 30 qui, par le biais de la rotation de l'élément mobile autour de l'axe 19 correspond à la position de repos du patin de freinage 13, lequel est escamoté dans la cavité de repos 14 du ski 8, tel qu'illustré à la figure 9.

Selon plusieurs variantes de réalisation de l'invention, il est possible d'utiliser comme moyen de commande 9, des systèmes mécaniques du type à tringles, à câbles, à cames, à courroies crantées ou à pignons, par exemple, ou des vérins pneumatiques ou hydrauliques, ou même d'autres actionneurs.

Les moyens de commande 9 sont destinés à être sollicités par le biais d'un dispositif de mise en action 7 piloté par l'utilisateur dudit véhicule de neige 2.

Dans le cas d'un actionneur électrique 25 solidaire du ski 8 et de l'axe de commande 23 de l'élément mobile de freinage 10, le dispositif de mise en action 7 est constitué d'une source d'alimentation électrique 36 alimentant l'actionneur 25 par l'intermédiaire d'un boîtier de contact 37, commandé par un levier 38 situé au guidon 39 du véhicule 2. Le boîtier de contact 37 peut prendre trois positions de contact :
- une position A fermée neutre dans laquelle il laisse passer le courant électrique de la source d'alimentation 36 jusqu'à l'actionneur 25 avec une polarité permettant d'actionner la sortie du piston 30 vers sa position de repos;
- une position intermédiaire B dite ouverte où il ne laisse pas passer le courant vers l'actionneur 25 ;
- une position C fermée active dans laquelle il laisse passer le courant en inversant les polarités aux bornes de sortie 40a, 40b du dispositif de mise en action 7, de manière à ce que le piston 30 de l'actionneur 25 soit alors mis en mouvement vers sa position active.

Ainsi le levier 38 commandant ledit boîtier de contact 37 peut se déplacer dans trois zones différentes α, β et γ, correspondant respectivement aux positions A, B et C du boîtier 37, et délimitées par quatre positions caractéristiques de la course angulaire qu'il peut parcourir :
- une position "a" dite " position de repos" dans laquelle le levier 38 est automatiquement ramené par un système élastique de rappel 43 lorsque l'utilisateur cesse d'agir sur le levier;
- une position "d" dite "position extrême de travail" ;
- deux positions intermédiaires "b" et "c" tel que le montrent les figures 9, 10 et 11.

Entre les positions a et b, le levier 38 se trouve en zone α et le boîtier de contact 37 en position A, tel qu'illustré figure 9 ; l'actionneur 25 est donc sollicité vers sa position de repos jusqu'à ce qu'il l'atteigne, ou que ledit levier 38 change de zone ; lorsque ladite position de repos est atteinte, un contact de fin de course 29a coupe l'alimentation aux bornes de l'actionneur 25 qui ne peut dès lors qu'être sollicité par un courant électrique de polarité inversée correspondant à la position C du boîtier de contact 37 et une position du levier 38 en zone γ.

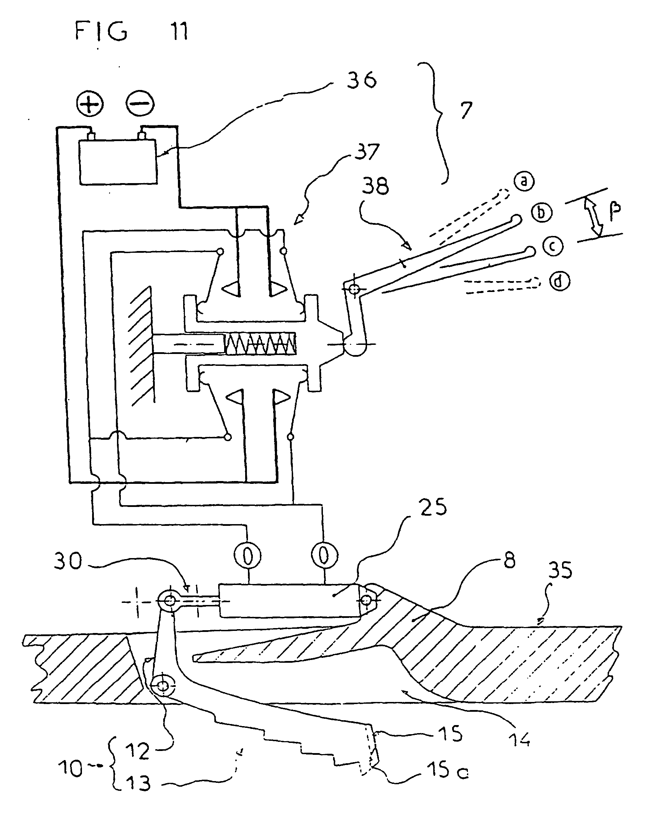

Entre les positions b et c, le levier 38 se situe dans la zone β et le boîtier 37 en position B tel qu'illustré figure 11. L'alimentation électrique de l'actionneur 25 est coupée, de sorte que ce dernier reste dans la position acquise précédemment et par voie de conséquence maintient le patin de freinage 13 dans la position correspondante .

Entre les positions c et d, le levier se situe en zone γ et le boîtier de contact 37 en position C, tel qu'illustré figure 10. L'actionneur 25 est donc sollicité vers sa position active jusqu'à ce qu'il l'atteigne, ou que le levier 38 change de zone. Lorsque la position extrême active est atteinte, le deuxième contact de fin de course 29b coupe l'alimentation de l'actionneur 25, qui ne peut dès lors qu'être sollicité par un courant électrique de polarité inversée correspondant à la position A du boîtier de contact 37 et une position en zone α du levier 38.

Il est, en outre, possible sans pour autant sortir du cadre de l'invention de remplacer le levier 38, par exemple, par une pédale ou un bouton poussoir actionné au pied, ou une poignée tournante située sur le guidon.

En outre, dans le cas où le véhicule de neige 2 tire un traîneau, ce dernier peut être équipé d'au moins un élément mobile de freinage pouvant faire saillie hors de la surface de glissement du traîneau. L'élément mobile de freinage est actionné par des moyens des commande montés sur le traîneau, similaires à ceux du véhicule, lesdits moyens de commande du traîneau pouvant être sollicités avantageusement par le dispositif de mise en action 7 du dispositif de freinage 1 du véhicule de neige 2, tractant ledit traîneau.

Selon une variante possible de l'invention, les moyens de commande 9 sont constitués par un actionneur électrique 25 réversible sous charge, dont le rappel vers la position de repos est obtenu par sollicitation mécanique grâce à la poussée de la neige sur l'élément de freinage 10, et à des ressorts de rappel lorsque le levier 38 du dispositif de mise en action se situe en zone α. Un frein électromagnétique est mis sous tension par le boîtier de contact 37 lorsque le levier 38 se trouve en zone β, de manière à bloquer l'actionneur dans la position acquise, et lorsque le levier 38 se situe en zone γ, l'actionneur est alimenté de manière à amener l'élément de freinage 10 jusqu'en position extrême active.

Les moyens de commande 9 peuvent être constitués par un système à incréments constitués de plusieurs électro-aimants montés en série, ou avec des électro-aimants à action proportionnelle, ou de moteurs électriques à codeurs angulaires dont les positions de travail seront en corrélation directe avec les positions occupées par le levier 38. La position "a" du levier 38 correspond à la position de repos du patin de freinage 13, la position "d" du levier 38 correspond alors à la position active sortie au maximum du patin de freinage 13, tandis que les positions "b" et "c" du levier 38 correspondent à des positions intermédiaires proportionnelles du patin de freinage 13.

Par ailleurs, pour assurer l'évacuation de la neige arrachée par le patin de freinage 13 lorsque celui-ci est utilisé, une fenêtre 44 (figure 13), est ménagée à travers le ski 8. Des lames fixes 45, 46 sont conformées en couteaux longitudinaux de guidage sur neige dure, et assurent en plus un renfort de solidité dans la zone centrale du ski 8, laquelle est affaiblie par la diminution de section due à l'ouverture de la fenêtre 44 et de la cavité de repos 14, tel qu'illustré figures 13 et 14.

L'ouverture du circuit d'allumage du moteur du véhicule de neige 2 entraîne automatiquement la mise en position active maximale de l'élément de freinage 10, tandis que la fermeture du circuit d'allumage provoque son en position retour inactive de non freinage. L'ouverture et la fermeture du circuit d'allumage s'opère au moyen d'un contacteur à clé ou de sécurité.

Selon une variante de réalisation, pour permettre une réactivité optimale et un dosage plus fin du freinage, le boîtier de contact 37 coopère avec un circuit de commande électronique ou électrique destiné à faire varier le courant d'alimentation du moteur de l'actionneur 25. La vitesse d'actionnement est ainsi modulable, et est notamment décroissante au fur et à mesure que le levier 38 s'éloigne de la position "a" pour se rapprocher de la position "b", puis devienne nulle lorsque le levier 38 est situé entre les positions "b" et "c". La vitesse croît lorsque le levier 38 s'éloigne de la position "c" pour se rapprocher de la position "d". Il en est de même lors du déplacement inverse du levier 38, la vitesse d'actionnement étant décroissante lorsque le levier 38 s'éloigne de la position "d" pour se rapprocher de la position "c", puis devient nulle lorsque le levier est situé entre les positions "c" et "d", et croît lorsque le levier 38 s'éloigne de la position "b" pour se rapprocher de la position "a".

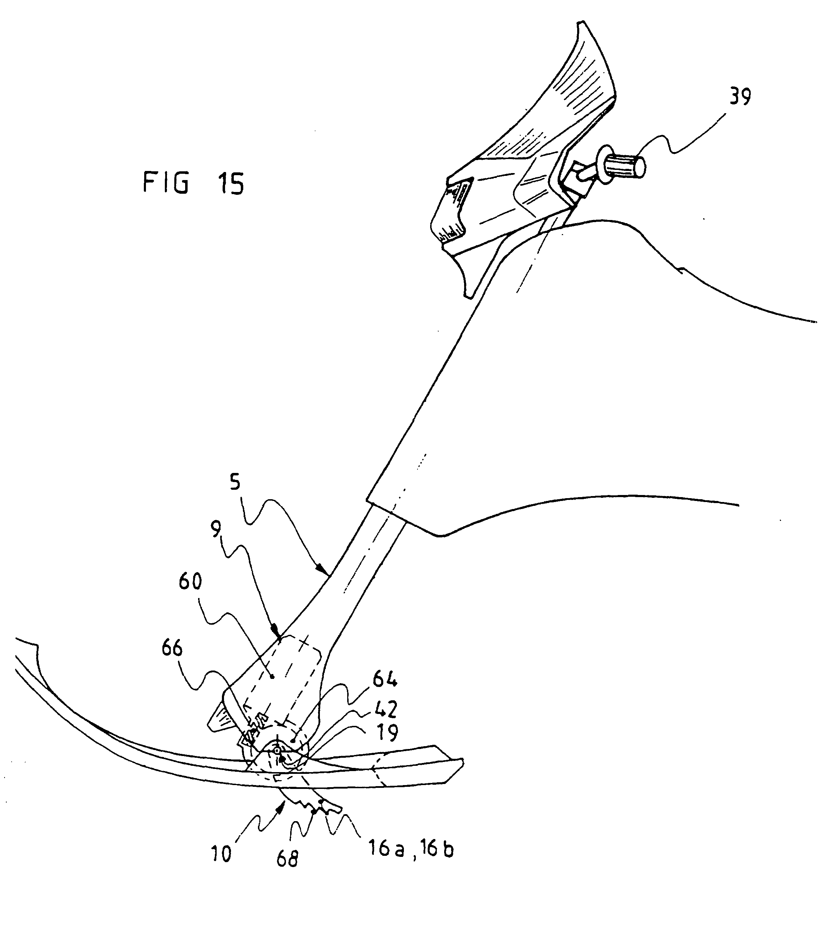

Sur la figure 15, l'axe 19 de rotation de l'élément de freinage 10 est sensiblement coaxial avec l'axe 42 d'articulation de la colonne de direction 5. Les moyens de commande 9 sont intégrés dans la colonne de direction 5, et comportent un dispositif à moteur d'entraînement 60 coopérant avec des moyens de transmission 62 couplés avec l'élément de freinage 10. Les moyens de transmission 62 sont constitués par une roue dentée 64 ou un secteur de roue dentée actionnée par une vis sans fin 66 s'étendant perpendiculairement par rapport à l'axe (19) de rotation de l'élément de freinage 10.

Dans le cas d'un véhicule à deux skis sur l'ensemble avant de direction, chaque ski est équipé d'un élément de freinage 10. Un dispositif répartiteur peut être prévu pour augmenter la saillie de l'élément de freinage du ski intérieur par rapport à celle du ski extérieur en fonction de l'angle de braquage dans un virage.

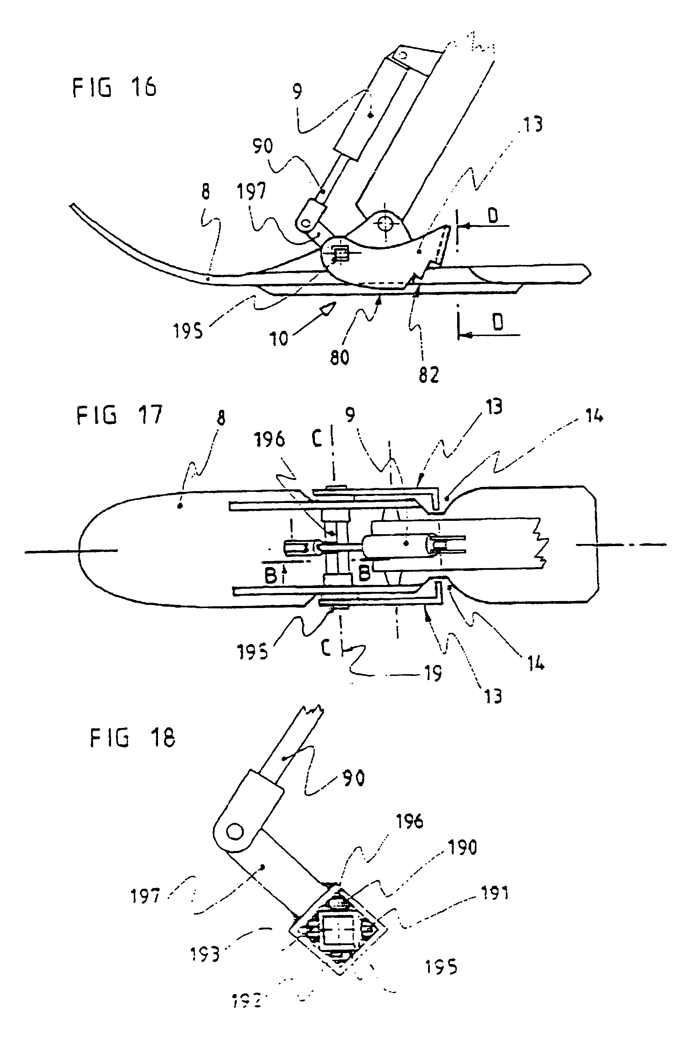

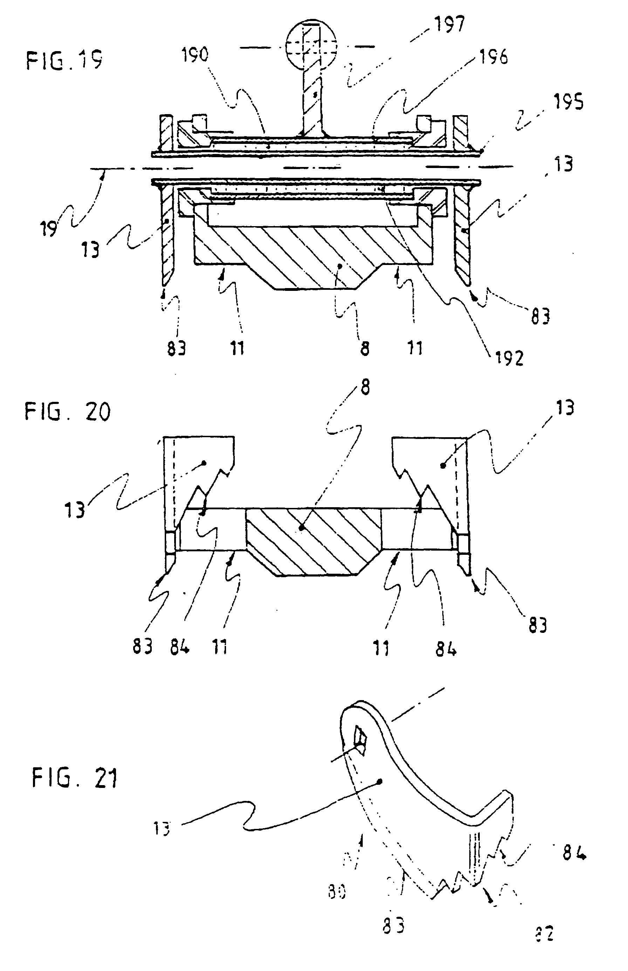

Sur la variante de réalisation des figures 16 à 21, les deux patins latéraux de freinage 13 jouent également le rôle de couteaux de guidage. Le bord inférieur de chaque patin 13 comporte une première partie 80 antérieure de forme arrondie et sans dent, et une deuxième partie 82 postérieure crantée. La première partie 80 est dotée d'une arête inférieure affûtée 83 jouant le rôle de couteau pénétrant dans la neige. L'arète 83 reste en saillie par rapport a la surface de glissement 11 du ski 8, même lorsque le patin de freinage 13 est en position escamotée de repos. Les dents 84 sont en retrait dans le sens vertical par rapport à l'arête 83 de manière à se trouver au-dessus de la neige dans la position de non-freinage . La présence des arêtes 83 des couteaux est particulièrement efficace pour guider le véhicule dans les virages. Dans cette variante de réalisation les patins de freinage 13 sont montés pivotants autour d'un axe 19 entraîné en rotation par l'actionneur 9 par l'intermédiaire d'un accouplement élastique, lequel est constitué d'une pluralité de blocs 190,191,192,193 de caoutchouc précontraints agencés entre les quatre faces d'un premier tube 195 carré et les quatre angles d'un deuxième tube 196 carré, le premier tube 195 étant disposé concentriquement à l'intérieur du deuxième tube 196, et concentriquement également avec l'axe 19 de pivotement des patins 13 de freinage avec lesquels il est solidarisé en rotation. Le deuxième tube 196 est solidarisé en rotation avec la biellette 197 reliée à la tige 90 de l'actionneur 9. Le tube 195 peut tourner autour de l'axe 19 de plusieurs degrés par rapport au tube 196 à l'encontre de la force de rappel élastique exercée par les blocs de caoutchouc 190, 191, 192, 193.

Grâce à cet accouplement élastique, les patins de freinage 13 peuvent pivoter vers le haut dans la direction de non-freinage en tournant autour de l'axe 19 pour s'escamoter partiellement au moins et de façon momentanée lorsqu'ils heurtent trop violemment un corps dur, notamment une pierre ou un bloc de glace, pour revenir, aussitôt que l'obstacle a été dépassé, à la position de freinage qu'ils occupaient avant le choc, et ce sans que le pilote du véhicule n'ait à actionner les moyens de commande 9.

Cette disposition comportant un dispositif élastiquement déformable positionné entre les patins de freinage et les moyens de commande des patins de freinage, évite le basculement du véhicule vers l'avant lors du blocage brutal des skis passant sur un obstacle dur, alors que les patins de freinage sont en position active en saillie sous la surface de glissement des skis. Il en résulte également un équilibrage instantané du freinage entre les deux skis en fonction de la dureté de la neige, de la glace ou des obstacles qu'ils rencontrent, évitant ainsi le pivotement latéral en dérapage brutal et dangereux du véhicule lorsque l'un seulement des deux patins heurte un obstacle

Le dispositif de freinage peut comporter des moyens de mise en action pilotant à la fois le dispositif de freinage du véhicule, et le dispositif de freinage d'un traîneau tracté par ledit véhicule.

L'arête inférieure de l'élément de freinage 10 peut être recouverte sur au moins une partie de sa longueur, d'éléments ayant une résistance à l'usure élevée, et réalisés notamment en un matériau à base de carbure de tungstène.

## Revendications

1. Véhicule motorisé sur neige (2) comprenant :
- un ensemble avant de direction (3) comportant au moins une colonne de direction (5) solidaire d'au moins un ski (8), et articulée en rotation autour d'un axe (42),
- et un ensemble arrière porteur (4), équipé au moins d'une chenille de propulsion,
**caractérisé en ce que** l'ensemble avant de direction (3) comprend au moins un élément de freinage (10) mobile, piloté par des moyens de commande (9) entre une position de repos en partie au moins escamotée à l'intérieur d'une cavité (14) du ski (8), et une position active de freinage faisant saillie sous la surface de glissement (11) du ski (8) dans une zone médiane (41) se situant sensiblement au niveau de l'axe d'articulation (42) entre la colonne de direction (5) et le ski (8).

2. Véhicule motorisé sur neige selon la revendication 1, **caractérisé en ce que** l'élément de freinage (10) est mobile en coulissement soit par rapport au ski (8), soit par rapport à la colonne de direction (5).

3. Véhicule motorisé sur neige selon la revendication 2, **caractérisé en ce que** le déplacement en coulissement de l'élément de freinage (10) s'effectue par rapport au ski (8) selon un axe s'étendant de l'arrière et du haut vers l'avant et le bas du ski, ou selon un axe s'étendant de l'avant et du haut vers l'arrière et le bas du ski.

4. Véhicule motorisé sur neige selon la revendication 1, **caractérisé en ce que** l'élément de freinage (10) est mobile en rotation par rapport à un axe (19) transversal s'étendant perpendiculairement par rapport au plan longitudinal de symétrie du ski (8), le déplacement en rotation de l'élément de freinage (10) de la position active vers la position de repos s'effectuant vers le haut.

5. Véhicule motorisé sur neige selon la revendication 1, **caractérisé en ce que** l'élément de freinage (10) comporte un patin de freinage (13), constitué d'au moins une lame (16a, 16b) d'agrippage destinée à assurer un effet de freinage progressif en fonction de l'enfoncement dans la neige.

6. Véhicule motorisé sur neige selon la revendication 5, **caractérisé en ce que** le patin de freinage (13) comporte deux lames crantées latérales (16a, 16b) sensiblement parallèles au plan longitudinal de symétrie, et une lame crantée transversale (15) reliant les lames latérales (16a, 16b) dont le rebord inférieur (15a) est en retrait vers le haut par rapport aux rebords inférieurs des lames 16a, 16b).

7. Véhicule motorisé sur neige selon la revendication 1, **caractérisé en ce qu'**il comporte un dispositif de mise en action (7) comprenant :
- une alimentation électrique en courant continu (36) ;
- un boîtier de contact (37) doté d'un contacteur ayant une première position fermée neutre, une deuxième position fermée d'inversion de la polarité du courant de sortie par rapport à celle de la première position fermée neutre, et une troisième position ouverte d'interruption du courant située entre les deux précédente,
- et un organe de sélection (38) destiné à actionner le contacteur de la première position vers la deuxième position à l'encontre d'un moyen de rappel.

8. Véhicule motorisé sur neige selon la revendication 7, **caractérisé en ce que** les moyens de commande (9) comportent un actionneur électrique (25) piloté par le contacteur, et coopérant avec deux contacts de fin de course (29a, 29b), permettant de couper l'alimentation de l'actionneur (25) dans lesdites positions extrêmes active et de repos.

9. Véhiculé motorisé sur neige selon la revendication 1, **caractérisé en ce que** les moyens de commande (9) comportent un vérin hydraulique ou pneumatique.

10. Véhicule motorisé sur neige selon la revendication 1, **caractérisé en ce que** l'élément de freinage (10) est agencé dans une fenêtre (44) ménagée dans le ski (8) pour permettre l'évacuation de la neige arrachée par le patin lorsqu'il se trouve en position active pendant l'avancement du véhicule.

11. Véhicule motorisé sur neige selon la revendication 1, **caractérisé en ce que** les moyens de commande (9) sont intégrés dans un logement du ski (8).

12. Véhicule motorisé sur neige selon la revendication 4, **caractérisé en ce que** l'axe (19) de rotation de l'élément de freinage (10) est coaxial avec l'axe (42) d'articulation de la colonne de direction (5).

13. Véhicule motorisé sur neige selon la revendication 12, **caractérisé en ce que** les moyens de commande (9) sont solidarisés à la colonne de direction (5), et comportent un dispositif à moteur d'entraînement (60) coopérant avec des moyens de transmission (62) couplés avec l'élément de freinage (10).

14. Véhicule motorisé sur neige selon la revendication 13, **caractérisé en ce que** les moyens de transmission (62) sont constitués par un secteur de roue dentée ou par une roue dentée (64) complète actionnée par une vis sans fin (66) s'étendant perpendiculairement par rapport à l'axe (19) de rotation de l'élément de freinage (10)

15. Véhicule motorisé sur neige selon la revendication 1, **caractérisé en ce que** l'ouverture du circuit d'allumage du moteur d'entraînement de véhicule (2) provoque automatiquement la sortie de l'élément de freinage (10) vers la position active maximale, et la fermeture dudit circuit d'allumage provoque provoque le retour automatique de l'élément de freinage (10) vers la position inactive de non-freinage.

16. Véhicule motorisé sur neige selon la revendication 1, appliqué à un véhicule à deux skis sur l'ensemble avant de direction, chaque ski étant équipé d'un élément de freinage (10),
**caractérisé en ce qu'**il comporte un dispositif répartiteur destiné à augmenter la saillie de l'élément de freinage (10) du ski intérieur par rapport à celle du ski extérieur en fonction de l'angle de braquage dans un virage.

17. Véhicule motorisé sur neige selon la revendication 7, **caractérisé en ce que** les moyens de commande (9) comportent un actionneur électromagnétique ou un actionneur actionné par un moteur électrique à codeur angulaire en corrélation avec les positions du levier (38) de sélection.

18. Véhicule motorisé sur neige selon la revendication 1, **caractérisé en ce que** le bord inférieur de chaque élément de freinage (10) comporte une première partie (80) antérieure avec une arête (83) jouant le rôle de couteau restant en saillie par rapport à la surface de glissement adjacente (110) de la semelle de glissement (11) du ski (8) lorsque le patin de freinage (13) est en partie escamotée de repos, et une deuxième partie (82) postérieure crantée dont les dents (84) sont en retrait dans le sens vertical par rapport à l'arête (83), de manière à se trouver au-dessus de la neige dans la position de non-freinage.

19. Véhicule motorisé sur neige selon la revendication 1, **caractérisé en ce** l'arête inférieure de l'élément de freinage (10) peut être recouverte sur au moins une partie de la longueur, d'éléments ayant une résistance à l'usure élevée, notamment du carbure de tungstène.

20. Véhicule motorisé sur neige selon la revendication 1, **caractérisé en ce que** les moyens de commande (9) entraînent l'élément de freinage (10) par l'intermédiaire d'un dispositif élastiquement déformable.

## Claims

1. A motorized snow vehicle (2), comprising:
- a front steering assembly (3) comprising at least one steering column (5) secured to at least one ski (8), and articulated in rotation around a spindle (42),
- and a rear support assembly (4), equipped with at least one driving caterpillar track,
**characterized in that** the front steering assembly (3) comprises at least one mobile braking element (10), operated by control means (9) between a rest position at least partly retracted inside a cavity (14) of the ski (8), and an active braking position protruding out under the sliding surface (11) of the ski (8) in a middle zone (41) situated appreciably at the level of the articulation spindle (42) between the steering column (5) and the ski (8).

2. A motorized snow vehicle according to claim 1, **characterized in that** the braking element (10) is movable in sliding either with respect to the ski (8), or with respect to the steering column (5).

3. A motorized snow vehicle according to claim 2, **characterized in that** the sliding movement of the braking device (10) is performed with respect to the ski (8) according to an axis extending from the rear and top to the front and bottom of the ski, or according to an axis extending from the front and top to the rear and bottom of the ski.

4. A motorized snow vehicle according to claim 1, **characterized in that** the braking element (10) is movable in rotation with respect to a transverse spindle (19) extending perpendicularly with respect to the longitudinal plane of symmetry of the ski (8), the rotation movement of the braking element (10) from the active position to the rest position taking place upwards.

5. A motorized snow vehicle according to claim 1, **characterized in that** the braking element (10) comprises a brake shoe (13) formed by at least one gripping blade (16a, 16b) designed to achieve a progressive braking effect according to the depth of penetration in the snow.

6. A motorized snow vehicle according to claim 5, **characterized in that** the brake shoe (13) comprises two lateral notched blades (16a, 16b) appreciably parallel to the longitudinal plane of symmetry, and a transverse notched blade (15) joining the lateral blades (16a, 16b), the bottom edge (15a) of which transverse blade is retracted upwards with respect to the bottom edges of the lateral blades (16a, 16b).

7. A motorized snow vehicle according to claim 1, **characterized by** an actuating device (7) comprising:
- a DC electrical power supply (36);
- a contact box (37) provided with a contactor having a first closed neutral position, a second closed position in which the polarity of the output current is reversed with respect to that of the first closed neutral position, and a third open position in which the current is interrupted, situated between the previous positions,
and a selection means (38) designed to actuate the contactor from the first position to the second position against a return means.

8. A motorized snow vehicle according to claim 7, **characterized in that** the control means (9) comprise an electrical actuator (25) controlled by the contactor and operating in conjunction with two end-of-travel contacts (29a, 29b) enabling the power supply of the actuator (25) to be cut off in said extreme active and rest positions.

9. A motorized snow vehicle according to claim 1, **characterized in that** the control means (9) comprise a hydraulic or pneumatic jack.

10. A motorized snow vehicle according to claim 1, **characterized in that** the braking element (10) is located in a window (44) arranged in the ski (8) to enable removal of the snow dragged off by the shoe when it is in the active position during forward movement of the vehicle.

11. A motorized snow vehicle according to claim 1, **characterized in that** the control means (9) are integrated in a housing of the ski (8).

12. A motorized snow vehicle according to claim 4, **characterized in that** the rotation spindle (19) of the braking element (10) is coaxial with the articulation spindle (42) of the steering column (5).

13. A motorized snow vehicle according to claim 12, **characterized in that** the control means (9) are securedly affixed to the steering column (5), and comprise a drive motor device (60) operating in conjunction with transmission means (62) coupled with the braking element (10).

14. A motorized snow vehicle according to claim 13, **characterized in that** the transmission means (62) are formed by a sector of cogwheel or by a complete cogwheel (64) actuated by an endless screw (66) extending perpendicularly with respect to the rotation spindle (19) of the braking element (10).

15. A motorized snow vehicle according to claim 1, **characterized in that** opening of the ignition circuit of the drive motor of the vehicle (2) automatically causes the braking element (10) to be moved out to its maximum active position, and closing of said ignition circuit causes the braking element (10) to be automatically returned to the inactive non-braking position.

16. A motorized snow vehicle according to claim 1, applied to a vehicle with two skis on the front steering assembly, each ski being equipped with a braking element (10), **characterized in that** it comprises a distribution device designed to increase the protrusion of the braking element (10) of the inside ski with respect to that of the outside ski according to the steering angle in a bend.

17. A motorized snow vehicle according to claim 7, **characterized in that** the control means (9) comprise an electromagnetic actuator or an actuator actuated by an electric motor with an angular encoder in correlation with the positions of the selection lever (38).

18. A motorized snow vehicle according to claim 1, **characterized in that** the bottom edge of each braking element (10) comprises a first front part (80) with a sharp edge (83) acting as a knife-blade remaining protruding out with respect to the adjacent sliding surface (110) of the sliding sole (11) of the ski (8) when the brake shoe (13) is partly retracted in the rest position, and a second notched rear part (82) whose teeth (84) are set back in the vertical direction with respect to the sharp edge (83) so as to be above the snow in the non-braking position.

19. A motorized snow vehicle according to claim 1, **characterized in that** the bottom edge of the braking element (10) can be covered over at least a part of its length by elements having a high resistance to wear, in particular tungsten carbide.

20. A motorized snow vehicle according to claim 1, **characterized in that** the braking element (10) are actuated by the control means (9) through an elastic flexible device.

## Patentansprüche

1. Schnee-Motorfahrzeug (2), das umfasst:
- eine vordere Lenkeinheit (3), die mindestens eine Lenksäule (5) umfasst, die fest mit mindestens einem Ski (8) verbunden und um eine Achse (42) drehbar angelenkt ist,
- sowie eine hintere Einheit (4), die mit mindestens einer Antriebskette verbunden ist,
**dadurch gekennzeichnet, dass** die vorne angeordnete Lenkeinheit (3) mindestens ein bewegliches Bremselement (10), das von Steuerungsmitteln (9) zwischen einer zumindest teilweise versenkten Ruheposition innerhalb einer Aussparung (14) des Skis (8) und einer aktiven Bremsposition gesteuert wird, in der sie unter die Gleitfläche (11) des Skis (8) in einem mittleren Bereich (41) heraussteht, der sich im Wesentlichen in Höhe der Gelenkachse (42) zwischen der Lenksäule (5) und dem Ski (8) befindet.

2. Schnee-Motorfahrzeug nach Anspruch 1, **dadurch gekennzeichnet, dass** das Bremselement (10) gleitbeweglich entweder bezüglich dem Ski (8) oder bezüglich der Lenksäule (5) ist.

3. Schnee-Motorfahrzeug nach Anspruch 2, **dadurch gekennzeichnet, dass** die Gleitbewegung des Bremselements (10) bezüglich dem Ski (8) entsprechend einer Achse erfolgt, die sich vom hinteren und oberen Bereich des Skis zu dessen vorderen und unteren Bereich oder entlang einer Achse erstreckt, die sich vom vorderen und oberen Bereich des Skis zu dessen hinteren und unteren Bereich erstreckt.

4. Schnee-Motorfahrzeug nach Anspruch 1, **dadurch gekennzeichnet, dass** das Bremselement (10) bezüglich einer quer verlaufenden Achse (19) drehbeweglich ist, die sich bezogen auf die Längs-Symmetrieebene des Skis (8) lotrecht erstreckt, wobei die Drehbewegung des Bremselements (10) aus der aktiven in Richtung auf die Ruheposition nach oben erfolgt.

5. Schnee-Motorfahrzeug nach Anspruch 1, **dadurch gekennzeichnet, dass** das Bremselement (10) einen Bremsschuh (13) umfasst, der von mindestens einer Eingriffskante (16a, 16b) gebildet wird, die dazu bestimmt ist, abhängig vom Einsinken in den Schnee für eine allmähliche Bremswirkung zu sorgen.

6. Schnee-Motorfahrzeug nach Anspruch 5, **dadurch gekennzeichnet, dass** der Bremsschuh (13) zwei formgezahnte, seitliche Kanten (16a, 16b) umfasst, die im Wesentlichen parallel zur Längs-Symmetrieebene verlaufen, sowie eine formgezahnte, quer verlaufende Kante (15), welche die seitlichen Kanten (16a, 16b) miteinander verbindet und deren Innenrand (15a) bezüglich den Innenrändem der Kanten (16a, 16b) nach oben zurückspringt.

7. Schnee-Motorfahrzeug nach Anspruch 1, **dadurch gekennzeichnet, dass** es eine Antriebsvorrichtung (7) hat, die umfasst:
- eine Gleichstromversorgung (36),
- einen Kontaktkasten (37), der mit einem Schalter versehen ist, der eine erste geschlossene, neutrale Position und eine zweite geschlossene Position zur Umkehrung der Polarität des Ausgangsstroms bezüglich derjenigen der ersten geschlossenen, neutralen Position sowie eine dritte, offene Stromunterbrechungsposition aufweist, die sich zwischen den beiden vorgenannten befindet,
- sowie eine Ansteuerungseinrichtung (38), die dazu bestimmt ist, den Schalter gegen die Kraft einer Rückholvorrichtung aus der ersten in die zweite Position zu bewegen.

8. Schnee-Motorfahrzeug nach Anspruch 7, **dadurch gekennzeichnet, dass** die Steuerungsmittel (9) einen Elektroschalter (25) aufweisen, der von dem Schalter gesteuert ist und mit zwei Endschaltern (29a, 29b) zusammenwirkt, die eine Unterbrechung der Stromversorgung des Elektroschalters (25) in den jeweiligen Endpositionen, nämlich der aktiven und der Ruheposition, erlauben.

9. Schnee-Motorfahrzeug nach Anspruch 1, **dadurch gekennzeichnet, dass** die Steuerungsmittel (9) ein Hydraulik- oder Pneumatikventil umfassen.

10. Schnee-Motorfahrzeug nach Anspruch 1, **dadurch gekennzeichnet, dass** die Bremsvorrichtung (10) in einer Öffnung (44) im Ski (8) angeordnet ist, um das Entfernen des von dem Schuh mitgerissenen Schnees zu erlauben, wenn er sich während der Vorwärtsbewegung des Fahrzeugs in aktiver Position befindet.

11. Schnee-Motorfahrzeug nach Anspruch 1, **dadurch gekennzeichnet, dass** die Steuerungsmittel (9) in eine Aufnahmeöffnung des Skis (8) integriert sind.

12. Schnee-Motorfahrzeug nach Anspruch 4, **dadurch gekennzeichnet, dass** die Drehachse (19) des Bremselements (10) koaxial zur Gelenkachse (42) der Lenksäule (5) verläuft.

13. Schnee-Motorfahrzeug nach Anspruch 12, **dadurch gekennzeichnet, dass** die Steuerungsvorrichtungen (9) fest mit der Lenksäule (5) verbunden sind und einen Antriebsmotor (60) mit Übertragungsmitteln (62) umfassen, die mit dem Bremselement (10) gekoppelt sind.

14. Schnee-Motorfahrzeug nach Anspruch 13, **dadurch gekennzeichnet, dass** die Übertragungsvorrichtungen (62) von einem Abschnitt eines Zahnrads oder einem ganzen Zahnrad (64) gebildet werden, das von einem Gewindestift (62) betätigt wird, der sich bezüglich der Drehachse (19) des Bremselements (10) lotrecht erstreckt.

15. Schnee-Motorfahrzeug nach Anspruch 1, **dadurch gekennzeichnet, dass** die Öffnung der Zündschaltung des Antriebsmotors des Fahrzeugs (2) automatisch das Herausfahren des Bremselements (10) in Richtung auf die maximale aktive Position und das Schließen dieser Zündschaltung die automatische Rückkehr des Bremselements (10) in seine inaktive Position bewirkt, in der es keine Bremswirkung hat.

16. Schnee-Motorfahrzeug nach Anspruch 1, angewandt auf ein Fahrzeug mit zwei Skiern im vorderen Lenkbereich, wobei jeder Ski mit einem Bremselement (10) versehen ist,
**dadurch gekennzeichnet, dass** es eine Verteilvorrichtung aufweist, die dazu bestimmt ist, das Herausragen des Bremselements (10) aus dem Innenski bezüglich dem Herausragen aus dem Außenski abhängig von dem Einschlagwinkel in einer Kurve zu erhöhen.

17. Schnee-Motorfahrzeug nach Anspruch 7, **dadurch gekennzeichnet, dass** die Antriebsmittel (9) einen elektromagnetischen Schalter oder einen Schalter umfassen, der von einem Elektromotor mit Winkelkodierer in Abhängigkeit von den Positionen des Steuerhebel (38) gesteuert wird.

18. Schnee-Motorfahrzeug nach Anspruch 1, **dadurch gekennzeichnet, dass** der untere Rand jedes Bremselements (10) einen ersten, vorderen Teil (80) mit einer Kante (83) umfasst, die die Funktion eines Messers hat, das bezüglich der angrenzenden Gleitfläche (110). der Gleitsohle (11) des Skis (8) überstehend bleibt, wenn der Bremsschuh (13) teilweise in Ruheposition versenkt ist, sowie einen zweiten, hinteren, gezahnten Teil (82), dessen Zacken (84) in vertikaler Richtung bezüglich der Kante (83) zurückspringen, sodass sie sich in Nicht-Bremsposition oberhalb des Schnees befinden.

19. Schnee-Motorfahrzeug nach Anspruch 1, **dadurch gekennzeichnet, dass** die Unterkante des Bremselements (10) zumindest auf einem Teil ihrer Länge mit Elementen bedeckt sein kann, die eine höhere Verschleißfestigkeit haben, insbesondere aus Wolframkarbid bestehen können.

20. Schnee-Motorfahrzeug nach Anspruch 1, **dadurch gekennzeichnet, dass** die Steuerungsvorrichtungen (9) das Bremselement (10) über eine elastisch verformbare Vorrichtung antreiben.
